Europäisches Patentamt

European Patent Office

Office européen des brevets

(19)

(11) EP 0 778 814 B1

(12) EUROPÄISCHE PATENTSCHRIFT

(45) Veröffentlichungstag und Bekanntmachung des Hinweises auf die Patenterteilung:
02.12.1998 Patentblatt 1998/49

(21) Anmeldenummer: 95929887.8

(22) Anmeldetag: 17.08.1995

(51) Int Cl.6: C04B 30/02, C04B 38/00, B01J 13/00

(86) Internationale Anmeldenummer:
PCT/EP95/03274

(87) Internationale Veröffentlichungsnummer:
WO 96/06808 (07.03.1996 Gazette 1996/11)

(54) **AEROGELVERBUNDSTOFFE, VERFAHREN ZU IHRER HERSTELLUNG SOWIE IHRE VERWENDUNG**

AEROGEL-CONTAINING COMPOSITE MATERIALS, PROCESS FOR PRODUCING THE SAME AND THEIR USE

MATERIAUX COMPOSITES CONTENANT UN AEROGEL, LEUR PROCEDE DE PRODUCTION ET LEUR UTILISATION

(84) Benannte Vertragsstaaten:
AT BE CH DE DK ES FR GB GR IE IT LI LU MC NL PT SE

(30) Priorität: 29.08.1994 DE 4430642

(43) Veröffentlichungstag der Anmeldung:
18.06.1997 Patentblatt 1997/25

(73) Patentinhaber: HOECHST AKTIENGESELLSCHAFT
65929 Frankfurt am Main (DE)

(72) Erfinder:
• FRANK, Dierk
  D-65719 Hofheim (DE)
• ZIMMERMANN, Andreas
  D-64347 Griesheim (DE)

(74) Vertreter: Luderschmidt, Schüler & Partner GbR
Patentanwälte,
Postfach 3929
65029 Wiesbaden (DE)

(56) Entgegenhaltungen:
EP-A- 0 059 860          WO-A-93/06044
WO-A-94/25149          DE-A- 3 346 180
DE-A- 4 106 727

• CHEMICAL ABSTRACTS, vol. 119, no. 4, 26.Juli 1993 Columbus, Ohio, US; abstract no. 33157k, & JP,A,05 043 344 (COLLOID RESEARCH)

**Beschreibung**

Die Erfindung betrifft Aerogelverbundstoffe, ein Verfahren zu ihrer Herstellung sowie deren Verwendung.

Aerogele mit Porositäten über 60 % und Dichten unter 0,6 g/cm³ weisen aufgrund ihrer sehr geringen Dichte und hohen Porosität eine sehr geringe Wärmeleitfähigkeit auf. Die hohe Porosität führt aber auch zu geringer mechanischer Stabilität sowohl des Gels aus dem das Aerogel getrocknet wird, wie auch des getrockneten Aerogels selbst. Die Aerogele sind nur wenig biegsam und sehr spröde.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinn, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes weitestgehend entfernt wird. Wird die Flüssigkeit des Gels dagegen unterkritisch, beispielsweise unter Bildung einer Flüssig-Dampf-Grenzphase entfernt, dann bezeichnet man das entstandene Gel als Xerogel. Bei der Verwendung des Begriffs Aerogele in der vorliegenden Anmeldung handelt es sich sofern nicht anders angegeben, um Aerogele im weiteren Sinn, d.h. im Sinn von "Gel mit Luft als Dispersionsmittel".

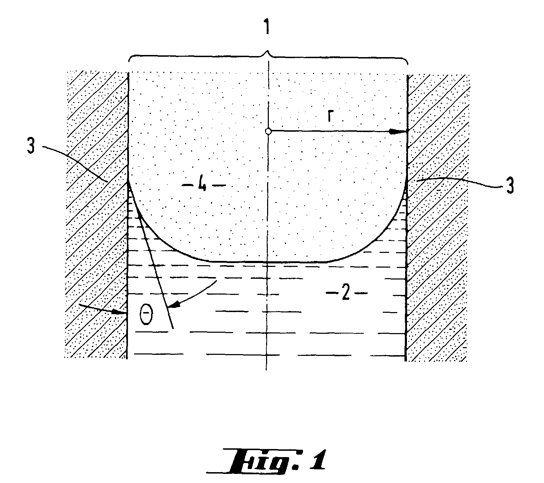

Bei der Trocknung konventioneller Gele treten durch Kapillarkräfte sehr hohe Spannungen auf, die in Verbindung mit der geringen Stabilität des hochporösen Gelgerüsts zum Kollaps bei der Trocknung führen. Der Kapillardruck $P_c$, der während der Trocknung entsteht, ist bestimmt durch die Oberflächenspannung $Y_{LV}$ der Oberfläche zwischen der Porenflüssigkeit 2 und ihrem Dampf 4, den Kontaktwinkel $\theta$ zwischen Flüssigkeitsmeniskus und Porenwand 3 und den Radius r der Pore 1 (Fig. 1):

$$P_c = - \frac{2\, y_{LV} \cos \theta}{r}$$

Der Kollaps läßt sich vermeiden, wenn man das Gel überkritisch trocknet, wie z.B. in der EP-A-0382310, der EP-A-0018955 und der US-A-4,610,863 beschrieben, und damit die Oberflächenspannung $Y_{LV}$ auf Null reduziert. Die so hergestellten Aerogele sind jedoch mechanisch nicht sehr stabil.

Durch eine Faserverstärkung des Aerogels kann, wie in der WO93/06044 beschrieben, ein faserverstärktes, monolithisches Aerogel erhalten werden, dessen mechanische Stabilität gegenüber der eines unverstärkten Aerogels erheblich verbessert ist. Durch die Faserverstärkung wird jedoch die Flexibilität des faserverstärkten, monolithischen Materials gegenüber der des reinen Aerogels weiter herabgesetzt, es entstehen Platten mit hohem Elastizitäts-Modul. Daneben erfordert das in der WO93/06044 beschriebene Herstellungsverfahren durch die Notwendigkeit der überkritischen Trocknung einen erheblichen technischen Aufwand. Dabei müssen für die Trocknung des Gels aus einem Alkohol, z.B. Methanol, Temperaturen von 250 bis 260°C und Drücke zwischen 9,7 und 15,9 MPa angewendet werden.

In der DE-A-43 42 548 und der WO 94/25149 werden Verfahren zur Herstellung von Xerogelen mit Dichten unter 0,3 g/cm³ und Porositäten über 60 % beschrieben, die die überkritische Trocknung von Gelen überflüssig machen. Dabei werden die Gele durch Behandlung der inneren Oberfläche, z.B. durch Silylierung im Fall von $SiO_2$-Xerogelen, so modifiziert, daß sie an der Luft getrocknet werden können, ohne zu kollabieren. Die so hergestellten Xerogele sind ebenfalls mechanisch nicht sehr stabil und brechen leicht.

Für eine Reihe von Anwendungen wie z.B. die Verwendung als Wärmeisolationsmaterial für gewölbte Flächen wäre es wünschenswert, Aerogele in flexibler Form, d.h. in Form sehr flexibler Platten bzw. Matten, verwenden zu können. Die große Sprödigkeit der Aerogele, gemäß dem Stand der Technik, verhindert dies jedoch.

Aufgabe der vorliegenden Erfindung ist es daher, sehr flexible Aerogele mit Porositäten über 60 % und Dichten unter 0,6 g/cm³ bereitzustellen.

Gegenstand der Erfindung sind Verbundstoffe in Form einer Matte, enthaltend ein Aerogel mit Porositäten über 60 % und Dichten unter 0,6 g/cm³ und darin verteilte Fasern, dadurch gekennzeichnet, daß das Aerogel Risse aufweist und die von den Rissen eingeschlossenen Aerogel-Bruchstücke, deren mittleres Volumen 0,001 mm³ bis 1 cm³ beträgt, durch die Fasern zusammengehalten werden.

Die erfindungsgemäßen Verbundstoffe enthalten bevorzugt Aerogel-Bruchstücke mit einem mittleren Volumen von 0,1 bis 30 mm³. Je kleiner das mittlere Volumen der Bruchstücke des Verbundstoffs ist, desto größer ist die mechanische Flexibilität des Verbundstoffs. Die Flexibilität des Verbundstoffs wird darüber hinaus auch von der Flexibilität der Faser und des Aerogels beeinflußt. Typischerweise ist ein erfindungsgemäßer Verbundstoff flexibler als ein entsprechendes nach dem Stand der Technik hergestelltes monolithisches Aerogel mit oder ohne Faserverstärkung.

Geeignete Aerogele für die erfindungsgemäßen Verbundstoffe sind solche auf Basis von Metalloxiden, die für die Sol-Gel-Technik geeignet sind (C.J. Brinker, G.W. Scherer, Sol-Gel-Science, 1990, Kap. 2 und 3), wie beispielsweise Si- oder Al-Verbindungen oder solche auf der Basis organischer Stoffe, die für die Sol-Gel-Technik geeignet sind, wie z.B. Melaminformaldehydkondensate (US-A-5,086,085) oder Resorcinformaldehydkondensate (US-A-4,873,218). Sie können auch auf Mischungen der obengenannten Materialien basieren.

Bevorzugt verwendet werden Aerogele, enthaltend Si-Verbindungen, insbesondere $SiO_2$-Aerogele. Zur Reduktion des Strahlungsbeitrags der Wärmeleitfähigkeit kann das Aerogel IR-Trübungsmittel wie z.B. Ruß, Titandioxid, Eisenoxide oder Zirkondioxid oder Mischungen derselben enthalten.

Zur Erzielung einer Färbung können gegebenenfalls Farbstoffe und/oder Farbpigmente in dem Gel enthalten sein.

Besonders bevorzugt eingesetzt werden Xerogele; ganz besonders bevorzugt $SiO_2$-Xerogele.

Als Fasermaterial können anorganische Fasern, wie Glasfasern oder Mineralfasern, organische Fasern, wie Polyesterfasern, Aramidfasern, Nylonfasern oder Fasern pflanzlichen Ursprungs, sowie Gemische derselben verwendet werden. Die Fasern können auch beschichtet sein, z.B. Polyesterfasern, die mit einem Metall wie Aluminium metallisiert sind.

Die Beschichtung kann auch einer besseren Anbindung des Aerogels an die Fasern dienen, in Analogie zu sog. "coupling agents" auf Glasfasern in glasfaserverstärkten Kunststoffen.

Die Brandklasse des Verbundstoffs wird durch die Brandklasse des Aerogels und die des Fasermaterials bestimmt. Um eine möglichst günstige Brandklasse (schwer entflammbar oder unbrennbar) des Verbundstoffs zu erhalten, sollten die Fasern aus nichtbrennbarem Material z.B. Mineral- oder Glasfasern oder aus schwerentflammbaren Fasern wie Melaminharzfasern bestehen. Weiterhin ist es möglich, organische Bestandteile der Aerogelmatrix durch thermische Behandlung abzuspalten, ohne daß die Struktur und damit die thermische Leitfähigkeit des Aerogels wesentlich verändert wird.

Um eine Erhöhung der Wärmeleitfähigkeit durch die zugegebenen Fasern zu vermeiden, sollte

a) der Volumenanteil der Fasern 0,1 bis 30 %, vorzugsweise 0,1 bis 10 % betragen und
b) die Wärmeleitfähigkeit des Fasermaterials so gering wie möglich, vorzugsweise < 1 W/mK,

sein.

Bei der Verwendung hoher Volumenanteile von Fasern mit hoher Dichte, wie z.B. Glasfasern, kann der Verbundstoff Dichten bis zu 0,6 $g/cm^3$ aufweisen.

Durch geeignete Wahl von Faserdurchmesser und/oder -material kann der Strahlungsbeitrag zur Wärmeleitfähigkeit reduziert und eine größere mechanische Festigkeit erzielt werden. Dazu soll der Faserdurchmesser bei

a) nichtmetallisierten Fasern vorzugsweise 0,1 bis 30 μm und/oder bei
b) metallisierten Fasern vorzugsweise 0,1 bis 20 μm betragen.

Der Strahlungsbeitrag zur Wärmeleitfähigkeit kann weiter dadurch reduziert werden, daß IR-getrübte Fasern, z.B. mit Ruß geschwärzte PET-Fasern, verwendet werden.

Die mechanische Festigkeit wird weiter durch Länge und Verteilung der Fasern im Aerogel beeinflußt. Die Fasern können z.B. als einzelne Fasern ungeordnet oder ausgerichtet eingebracht werden. In diesem Fall sollten sie, um eine hinreichende Festigkeit des Verbundstoffs zu gewährleisten, vorzugsweise mindestens 1 cm lang sein. Ebenso können Vliese oder Matten verwendet werden, wobei auch mehrere Vliese oder Matten übereinandergeschichtet werden können. Im Falle der Schichtung von Matten mit einer Vorzugsrichtung ist eine Änderung der Vorzugsrichtung von einer Schicht zur nächsten vorteilhaft.

Der Verbundstoff kann durch geeignete Modifikation der Porenoberflächen des Aerogels hydrophobisiert werden.

Ein weiterer Gegenstand der Erfindung ist ein Verfahren zur Herstellung der erfindungsgemäßen Verbundstoffe, das dadurch gekennzeichnet ist, daß

a) ein Sol hergestellt wird,
b) dem Sol Fasern zugesetzt werden,
c) das in b) erhaltene Sol in ein Gel überführt wird,
d) durch geeignete Verformung des Gels gezielt in dieses Risse eingebracht werden, so daß durch Fasern verbundene Bruchstücke mit einem mittleren Volumen von 0,001 $mm^3$ bis 1 $cm^3$ entstehen, wobei gegebenenfalls vor, während und/oder nach der Verformung die in dem Gel enthaltene Flüssigkeit ausgetauscht wird, und
e) das in d) erhaltene verformte Gel so getrocknet wird, daß ein Aerogel entsteht.

Als Ausgangsmaterial für Schritt a) dienen für die Sol-Gel-Technik geeignete Metalloxidverbindungen, insbesondere Si- und Al-Verbindungen (C.J. Brinker, G. W. Scherer, Sol-Gel-Science, 1990, Kap.2 und 3) wie Si- oder Al-Alkoxide, Wasserglas, organische Polykondensate auf Basis von Melaminformaldehydharzen (US-A-5,086,085) oder Resorcinformaldehydharzen (US-A-4,873,218) oder Mischungen derselben. Weiterhin kann das Sol aus partikulärem oder kolloidalem Si- oder Al-Oxid bestehen. Bevorzugt eingesetzt werden Si-Verbindungen, insbesondere Wasserglas.

Die Solpartikel tragen auf der Oberfläche funktionelle Gruppen, die zur Kondensation fähig sind. Diese Gruppen werden im folgenden Oberflächengruppen genannt. Typischerweise tragen Solpartikel aus Si- oder Al-Verbindungen hydrophile Hydroxylgruppen (OH). Herstellungsbedingt können auch noch Reste von Alkoxygruppen (OR) vorliegen, wenn Alkoxide als Ausgangsmaterial eingesetzt werden (C.J. Brinker, G.W. Scherer, Sol-Gel-Science, 1990, Kap. 10).

Setzt man dem Sol vor der Gelherstellung ein IR-Trübungsmittel, z.B. Ruß, Titandioxid, Eisenoxide oder Zirkondioxid zu, so kann der Strahlungsbeitrag zur Wärmeleitfähigkeit reduziert werden.

Zur Erzielung einer Färbung können gegebenenfalls Farbstoffe und/oder Farbpigmente zugesetzt werden.

Für die in Schritt b) eingesetzten Fasern gilt das obengenannte.

Zur besseren Dispergierbarkeit der Fasern bzw. Benetzung des Vlieses können die Fasern mit einer geeigneten Schlichte beschichtet sein. Die Beschichtung kann auch einer besseren Anbindung des Gels an die Fasern dienen.

Die Überführung des Sols in ein Gel (Schritt c) kann zum Beispiel durch Hydrolyse und Kondensation von Si- oder Al-Alkoxiden, Gelieren von partikulärem oder kolloidalem Si- oder Al-Oxid oder einer Kombination dieser Methoden erfolgen. Die Herstellung von Si-haltigen Gelen wird beispielsweise in der WO 93/06044 beschrieben. Die Herstellung der organischen Gele wird z.B. in der US-A-5,086,085 und der US-A-4,873,218 beschrieben.

Falls in Schritt a) ein wäßriges Sol verwendet wurde und der pH-Wert mit einer Mineralsäure verändert wurde, sollte das Gel mit Wasser elektrolytfrei gewaschen werden.

Die Zugabe der Fasern kann, insbesondere im Fall von Einzelfasern auch während der Gelbildung erfolgen, wenn das Sol schon eine hohe Viskosität erreicht hat, aber noch nicht fest ist.

Das Gel wird in Schritt d) so verformt, daß sich möglichst über die ganze Fläche verteilt Risse und von diesen eingeschlossene, durch Fasern verbundene Bruchstücke ausbilden. Dazu sollte die Verbiegung in gleicher Richtung sowohl zur Gelober- als auch -unterseite erfolgen. Dies läßt sich vorteilhaft dadurch erreichen, daß das Gel um drehbare Walzen oder Umlenkrollen geführt wird. Besonders gleichmäßige Bruchstücke werden erhalten, wenn man die Verformung in zwei zueinander senkrechten Richtungen durchführt. Das mittlere Volumen der Bruchstücke läßt sich, wenn die Risse durch Führen um Walzen erzeugt werden, durch Wahl des Walzendurchmessers und die Festigkeit des Gels (z.B. über die Gelalterung) gezielt beeinflussen. Der Durchmesser der Walzen beträgt vorzugsweise 2 bis 10 cm zur Bildung von Bruchstücken des vorgenannten mittleren Volumens. Je kleiner der Durchmesser dieser Rollen ist, desto kleiner ist das mittlere Volumen der Bruchstücke und desto größer ist die mechanische Flexibilität des Verbundstoffs.

Es ist vorteilhaft, das in Schritt c) oder d) erhaltene Gel altern zu lassen, um die Gelfestigkeit zu erhöhen. Die Alterung des Gels findet im allgemeinen bei einer Temperatur von 20°C bis zum Siedepunkt der in dem Gel enthaltenen Flüssigkeit statt. Handelt es sich bei der Gelflüssigkeit beispielsweise um Wasser und bei der Gelmatrix um $SiO_2$, so findet der Alterungsprozeß im allgemeinen bei 20 bis 90°C, vorzugsweise 20 bis 70°C, bei einem pH-Wert von 6 bis 11, vorzugsweise 6 bis 9, innerhalb von 1 Minute bis 48 Stunden, insbesondere 15 Minuten bis 24 Stunden statt.

Die in dem Gel enthaltene Flüssigkeit kann in mindestens einem Waschprozeß (Schritt d) durch die gleiche oder eine andere Flüssigkeit ausgetauscht werden, die für die nachfolgende Trocknung in Schritt e) geeignet ist.

Die Verformung des Gels kann vorteilhaft während des Austauschs der Flüssigkeit in Schritt d) durchgeführt werden.

Die Schritte a) bis d) werden im allgemeinen bei einer Temperatur zwischen dem Gefrierpunkt der im Gel enthaltenen Flüssigkeit und 70°C, jedoch maximal der Siedetemperatur der im Gel enthaltenen Flüssigkeit durchgeführt.

Vorteilhaft kann das in Schritt d) erhaltene Gel unterkritisch zu einem Aerogelverbundstoff getrocknet werden. Das Trocknungsverfahren ist dadurch gekennzeichnet, daß

e1) das im Schritt d) erhaltene Gel mit einer oder mehreren oberflächenmodifizierenden Substanzen so umgesetzt wird, daß ein so großer Anteil der Oberflächengruppen des Gels durch Gruppen der oberflächenmodifizierenden Substanz ersetzt wird, daß eine weitere Kondensation zwischen den Oberflächengruppen auf verschiedenen Porenoberflächen weitgehend unterdrückt wird und/oder durch Änderung des Kontaktwinkels zwischen Porenoberfläche und Flüssigkeit aus der getrocknet wird, die Kapillarkräfte reduziert werden,

e2) gegebenenfalls die in dem Gel enthaltene Flüssigkeit ausgetauscht wird und

e3) das resultierende Gel bei einer Temperatur unter der kritischen Temperatur der in dem Gel enthaltenen Flüssigkeit und einem Druck von 0,001 bar bis zu dem Dampfdruck dieser Flüssigkeit bei dieser Temperatur getrocknet wird.

Im Schritt d) muß zum Waschen eine für die folgenden Prozeßschritte geeignete Flüssigkeit verwendet werden. Enthält das Gel beispielsweise Wasser, empfiehlt es sich, das Gel mit einem protischen oder aprotischen organischen Lösungsmittel zu waschen bis der Wassergehalt des Gels $\leq$ 5 Gew.-%, bevorzugt $\leq$ 2 Gew.-% ist.

Als organische Lösungsmittel werden dabei im allgemeinen Ether, Ester oder Ketone sowie aliphatische oder aromatische Kohlenwasserstoffe verwendet. Bevorzugte Lösungsmittel sind Methanol, Ethanol, Aceton, Tetrahydrofuran, Essigsäureethylester, Dioxan, n-Hexan, n-Heptan und Toluol. Man kann auch Gemische aus den genannten Lösungsmitteln verwenden. Das Lösungsmittel muß hinsichtlich der im folgenden Schritt eingesetzten oberflächenmodifizierenden Substanz weitgehend inert sein.

Durch die in Schritt e1) verwendeten oberflächenmodifizierenden Substanzen wird ein großer Anteil der hydrophilen oder reaktiven Oberflächengruppen auf den Porenoberflächen zu hydrophoben oder zur weiteren Kondensation ungeeigneten Oberflächengruppen umgesetzt.

Als Folge wird eine weitere Kondensation zwischen Gruppen auf verschiedenen Porenoberflächen unterdrückt bzw. werden durch Änderung des Kontaktwinkels zwischen Porenwand und Flüssigkeitsmeniskus der Flüssigkeit aus der getrocknet wird, die Kapillarkräfte reduziert.

Im Fall, daß das Gel ein Silicium-, ein Aluminium- oder ein Siliciumaluminiumoxidgel ist, treten als ursprüngliche Oberflächengruppen im allgemeinen Gruppen der Formel MOH oder MOR auf, wobei M = Al oder Si und R = $C_1$-$C_6$-Alkyl, vorzugsweise Methyl oder Ethyl, ist. Durch Umsetzung mit oberflächenmodifizierenden Substanzen der allgemeinen Formel $R'_nMX_m$ werden die ursprünglichen Oberflächengruppen durch inerte Gruppen des Typs $MR'_n$ ersetzt. Dabei sind n und m ganze Zahlen größer als Null, deren Summe der Wertigkeit von M entspricht. R' ist Wasserstoff oder ein nicht reaktiver organischer linearer, verzweigter, zyklischer, aromatischer oder heteroaromatischer Rest wie z.B. $C_1$-$C_{18}$-Alkyl, bevorzugt $C_1$-$C_6$-Alkyl, vorzugsweise Methyl oder Ethyl, Cyclohexyl oder Phenyl; die R' sind unabhängig voneinander gleich oder verschieden oder können verbrückt sein. Weiter ist X ein Halogen, vorzugsweise Cl, oder ein Rest -OR", -SR" oder -NR"$_2$, wobei R" einen geradkettigen oder verzweigten, ein- oder mehrfach gleich oder verschieden substituierten aliphatischen Rest $C_1$ bis $C_{18}$ darstellt, in dem eine oder mehrere $CH_2$-Gruppen durch -C ≡ C-, -CH = CH-, -COO-, -O(C = O)-, SiR"'$_2$-, -CO-, Phenylendiyl und/oder bis zu jede zweite $CH_2$-Einheit durch O oder NR"' ersetzt sein können, wobei R"' gleich Phenyl, $C_1$-$C_{18}$-Alkyl oder Benzyl ist, oder R" ein Benzylrest oder Phenylrest bedeutet, der durch 1 bis 5 Substituenten R', OH, OR', COOR', OCOR', SO$_3$H, SD$_2$Cl, F, Cl, Br, NO$_2$ oder CN substituiert sein kann; im Falle von N können die R" unabhängig voneinander gleich oder verschieden sein. Ist m mindestens zwei, so können die X unabhängig voneinander gleich oder verschieden oder verbrückt sein. Es können auch Mischungen der oberflächenmodifizierenden Substanzen eingesetzt werden.

Bevorzugt werden Silylierungsmittel der Formel $R'_{4-n}SiCl_n$ oder $R'_{4-n}si(OR")_n$ mit n = 1 bis 3 eingesetzt, wobei R' und R" die vorstehende Bedeutung haben. Auch Silazane sind geeignet. Vorzugsweise verwendet man Methyltrichlorsilan, Dimethyldichlorsilan, Trimethylchlorsilan, Trimethylmethoxysilan oder Hexamethyldisilazan.

Vorzugsweise kann das silylierte Gel in Schritt e2) mit einem protischen oder aprotischen Lösungsmittel gewaschen werden, bis die unumgesetzte oberflächenmodifizierende Substanz im wesentlichen entfernt ist (Restgehalt ≤ 1 Gew.-%). Geeignete Lösungsmittel sind dabei die für Schritt d) genannten. Analog sind die dort als bevorzugt genannten Lösungsmittel auch hier bevorzugt.

In Schritt e3) wird in einer besonderen Ausführungsform das faserverstärkte, oberflächenmodifizierte Gel bei Temperaturen von -30 bis 200°C, vorzugsweise 0 bis 100°C, sowie einem Druck von 0,001 bis 20 bar, bevorzugt 0,01 bis 5 bar, besonders bevorzugt 0,1 bis 2 bar, getrocknet. Höhere Temperaturen als 200°C und/oder höhere Drücke als 20 bar sind ohne weiteres möglich, aber sie sind mit überflüssigem Aufwand verbunden und bringen keine Vorteile mit sich. Die Trocknung wird im allgemeinen so lange fortgeführt, bis das Gel einen Lösungsmittel-Restgehalt von weniger als 0,1 Gew.-% aufweist. Als Trocknungsverfahren geeignet sind zum Beispiel die Kontakt- und Konvektionstrocknung.

Darüber hinaus kann die Trocknung des Gels durch Verwendung von dielektrischen Trocknungsverfahren, z.B. durch Mikrowellentrocknung, wesentlich beschleunigt werden. Dazu wird nach der Oberflächenmodifikation das Lösungsmittel in Schritt e2), falls erforderlich, gegen ein Lösungsmittel ausgetauscht, das Mikrowellen gut absorbiert wie z.B. Wasser, Ethanol oder vorzugsweise Aceton. Die Gele lassen sich dann in einem Mikrowellentrockner schnell trocknen.

Besonders vorteilhaft für Lösungsmittelaustausch und Trocknung sind Gele mit einer Dicke zwischen 0,5 und 5 mm, da die Dauer für den Austausch von Lösungsmitteln bzw. die Trocknungszeit wesentlich durch Diffusion des Lösungsmittels bzw. des Lösungsmitteldampfes bestimmt wird.

Bevorzugt ist Verfahren zur Herstellung von erfindungsgemäßen Aerogelverbundstoffen, enthaltend ein SiO$_2$-Aerogel, das dadurch gekennzeichnet ist, daß

a) eine wäßrige Wasserglaslösung (SiO$_2$-Konzentration im allgemeinen ≤ 10 Gew.-%, vorzugsweise ≤ 7 Gew.-%) auf einen pH-Wert ≤ 3 eingestellt wird, beispielsweise mit Hilfe eines sauren Ionenaustauscherharzes oder einer Mineralsäure, und zu der dabei entstandenen Kieselsäure eine Base, im allgemeinen NH$_4$OH, NaOH, KOH, Al(OH)$_3$ und/oder kolloidale Kieselsäure, gegeben wird,
b) Fasern zugegeben werden,
c) man die Kieselsäure polykondensieren läßt,
d) durch geeignete Verformung des Gels gezielt in dieses Risse eingebracht werden, so daß durch Fasern verbundene Bruchstücke mit einem mittleren Volumen von 0,001 mm$^3$ bis 1 cm$^3$ entstehen, wobei vor, während und/oder nach der Verformung das Gel mit einem organischen Lösungsmittel gewaschen wird, bis der Wassergehalt des Gels ≤ 5 Gew.-% ist,
e1) das in Schritt d) erhaltene Gel mit einem Silylierungsmittel umgesetzt wird,
e2) gegebenenfalls das silylierte Gel mit einem organischen Lösungsmittel gewaschen wird bis der Restgehalt des unumgesetzten Silylierungsmittels ≤ 1 Gew.-% ist und
e3) das in Schritt e1) oder e2) erhaltene silylierte

Gel bei -30 bis 200°C und 0,001 bis 20 bar getrocknet wird.

In Schritt a) wird bevorzugt ein saures Ionenaustauscherharz eingesetzt.

Der so erhaltene Verbundstoff ist hydrophob, wenn die durch die Oberflächenmodifikation aufgebrachten Oberflächengruppen hydrophob sind, wie z.B. bei der Verwendung von Trimethylchlorsilan. Die Hydrophobizität kann nachträglich beispielsweise durch Austreiben bzw. partielle Pyrolyse reduziert werden.

Alternativ kann in Schritt e) das in Schritt d) erhaltene Gel z.B. durch Überführung der im Gel enthaltenen Flüssigkeit in einen überkritischen Zustand und anschließendes Entfernen der Flüssigkeit vom Feststoff durch Entspannungsverdampfung bei überkritischer Temperatur zu einem Aerogelverbundstoff getrocknet werden. Dazu muß in Schritt d) für den Austausch eine für die Trocknung geeignete Flüssigkeit, wie z.B. flüssiges $CO_2$ oder Methanol benutzt werden. Typische Prozesse zur überkritischen Trocknung aus $CO_2$ sind z.B. in der US-A-4,610,863 oder in Bommel M.J., de Haan, A.B., Journal of Materials Science, 29, (1994), S. 943-948, und aus Methanol in der EP-B-0396076 oder der WO 93/06044 beschrieben.

Um zum Schluß ein hydrophobes Aerogel zu erhalten, kann das Gel zwischen Schritt d) und e), ggf. nach dem Lösungsmitteltausch, mit einer oberflächenmodifizierenden Substanz umgesetzt werden, die zu einer Hydrophobisierung der Oberfläche führt. Ggf. muß nach diesem Schritt das Lösungsmittel noch einmal gegen die für die Trocknung geeignete Flüssigkeit ausgetauscht werden. Dazu geeignet sind z.B. die oben genannten Stoffe und Verfahren zur Oberflächenmodifikation. Vorteilhaft kann die Umsetzung aber auch nach der Trocknung durch eine Reaktion in der Gasphase erfolgen.

Der Vorteil des erfindungsgemäßen Verfahrens gegenüber einer Verformung eines bereits getrockneten, faserverstärkten Aerogels liegt in einer gleichmäßigeren Bildung von Bruchstücken und darin, daß bei einer Verformung im Gelzustand typischerweise keine Bruchstücke abplatzen.

Die so erhaltenen Verbundstoffe sind aufgrund der ähnlichen Größe der Bruchstücke optisch einheitlich aufgebaut.

Durch Wahl des eingesetzten Fasermaterials und die Stärke der Biegung nach der Gelbildung kann die Biegesteifigkeit der Verbundstoffe variiert werden. Durch Zusammenfügen von dünnen Aerogelmatten gemäß der Erfindung, z.B. durch Einbringen in eine geeignete Hülle, durch Verkleben oder durch eine geeignete mechanische Verbindung, wie Klammern oder Nähen, können diese verstärkt werden. Die Oberfläche des Verbundstoffes kann mit dem Fachmann bekannten Materialien wie z.B. Kunststoffolien, Papier, Vliesen oder Geweben, kaschiert werden.

Die erfindungsgemäßen Verbundstoffe eignen sich auf Grund ihrer geringen Wärmeleitfähigkeit als Wärmeisolationsmaterialien.

Bei Verwendung von transparenten Fasern wie z. B. Glasfasern bleibt die Matte transluzent und kann daher zur transparenten Wärmedämmung verwendet werden. Durch Wahl eines geeigneten Fasermaterials und einer geeigneten Verteilung kann zum einen die Transluzenz verändert werden, zum anderen ein dekorativer Effekt erzielt werden.

Daneben können sie als Schallabsorptionsmaterialien direkt oder in der Form von Resonanzabsorbern verwendet werden, da sie eine geringe Schallgeschwindigkeit und, verglichen mit monolithischen Aerogelen, eine höhere Schalldämpfung aufweisen. Durch gezielte Änderung des mittleren Volumens der Bruchstücke und damit der Anzahl der Risse läßt sich die Porosität des Materials und damit die Schalldämpfung erhöhen.

Kurze Beschreibung der Abbildung Figur 1 zeigt eine schematische Darstellung einer Pore 1, die mit Flüssigkeit 2 und Dampf 4 in etwa halb gefüllt ist, den zwischen Flüssigkeitsmeniskus und Porenwand 3 auftretenden Kontaktwinkels θ und den Radius r der Pore.

Beispiel 1:

Aus Tetraethylorthosilikat (TEOS) wurden Aerogelmatten nach folgendem Verfahren hergestellt:
100 ml TEOS, 100 ml Ethanol, 7,98 ml destilliertes Wasser und 0,33 ml 1M HCl wurden zusammengegeben und für 1,5 bis 2 Stunden unter Rückfluß gekocht.

10 Teile des Sols wurden mit einem Teil einer 0,5 molaren $NH_4OH$-Lösung versetzt und in Petrischalen über ein Polyestervlies aus je 50 % TREVIRA® 290 mit 0,9 dtex und 1,7 dtex mit einer Dichte von 15 kg/m³, vernadelt mit 150 Stichen/cm², gegossen. Die Menge war so groß, daß die Fasern gerade bedeckt waren. Die Gelierzeit betrug ca. 20 Minuten. Die Proben wurden dabei dicht verschlossen. Das Altern des Gels wurde durch 24-stündiges Tempern bei 50°C herbeigeführt.

Die so hergestellte Gelplatte wurden nun um einen Glaszylinder mit 3 cm Durchmesser gewickelt. Die Platte wurde jeweils einmal mit der Oberseite zum Glaszylinder und einmal mit der Unterseite zum Glaszylinder um den Zylinder gewickelt. Danach wurde der Vorgang noch einmal wiederholt, wobei die Platte um 90° gedreht wurde.

Das gealterte, auf Raumtemperatur abgekühlte Gel wurde in Ethanol gegeben und anschließend 1 Stunde auf 50°C erwärmt. Dieser Vorgang wurde noch zweimal mit frischem Ethanol und anschließend einmal mit n-Hexan wiederholt. Danach wurde noch dreimal das n-Hexan ausgetauscht, und die Probe für weitere 24 Stunden bei 50°C gelagert.
Die so entstandene Gelplatte wurde danach um einen Glaszylinder mit 3 cm Durchmesser gewickelt, zunächst mit der Plattenoberseite zum Glaszylinder danach mit der Plattenunterseite zum Glaszylinder. Danach wurde der Vorgang wiederholt, wobei die Gelplatte um 90° gedreht wurde.

Das feuchte Gel wurde dann mit 10 Gew.-% Trimethylchlorsilan (TMCS) versetzt und 24 Stunden bei 50°C gelagert. Danach wurden die TMCS-Reste zweimal mit n-Hexan je 1 Stunde bei 50°C ausgewaschen.

Die Trocknung erfolgte dann in drei Stufen über jeweils 24 Stunden bei 37°C, 50°C und 140°C.

Der Aerogelverbundstoff weist ein Bruchstückvolumen von 3,5 mm$^3$ auf. Die Wärmeleitfähigkeit wurde mit einer Heizdrahtmethode ( s. z.B. O. Nielsson, G. Rüschenpöhler, J. Groß, J. Fricke, High Temperatures - High Pressures, Vol 21, 267-274 (1989) ) gemessen. Es ergab sich ein Wert von 22 mW/mK. Der Modul wurde mit einer Drei-Punkt-Biegemethode gemessen (s. z.B. G. W. Scherer, S. A. Pardenek, R. M. Swiatek, J. Non-Crystalline Solids, Vol. 107 14-22 (1988) ). Es ergab sich ein Wert von 1,3 MPa, also verglichen mit einem Aerogel gemäß dem Stand der Technik eine sehr flexible Aerogelmatte.

Die Aerogelmatte zerbrach bei der Dreipunkt-Biegemessung nicht bei einer bestimmten Spannung, sondern verformte sich bei hohen Lasten nur irreversibel.

Beispiel 2:

Die Versuche wurden wie in Beispiel 1 durchgeführt, wobei jedoch ein Glaszylinder mit 10 cm Durchmesser verwendet wurde. Der Aerogelverbundstoff weist ein Bruchstückvolumen von 8 mm$^3$ auf. Wärmeleitfähigkeit und Modul wurden wie in Beispiel 1 bestimmt. Für die Wärmeleitfähigkeit ergab sich ein Wert von 20 mW/mK, für den Modul 2 MPa.

Die Aerogelmatte zerbrach bei der Dreipunkt-Biegemessung nicht bei einer bestimmten Spannung, sondern verformte sich bei hohen Lasten nur irreversibel.

Beispiel 3

Auf der Basis von Wasserglas wurden Aerogelmatten nach folgendem Verfahren hergestellt:

Ein Glasfaservlies mit einem Flächengewicht von 300 g/m$^2$ und einer Dicke von 3 mm (PolyMat-Glasnadelmatte Typ G300 der Fa. Schuller, Wertheim) wurde bei 500°C für 1 Stunde ausgeglüht.

1 l einer Natriumwasserglaslösung (mit einem Gehalt von 8 Gew.-% SiO$_2$ und einem Na$_2$O : SiO$_2$ Gewichtsverhältnis von 1:3,3) wurde zusammen mit 0,5 l eines sauren Ionenaustauscherharzes (Styroldivinylbenzolcopolymer mit Sulfonsäuregruppen, handelsüblich unter dem Namen ®Duolite C20) gerührt, bis die wäßrige Lösung einen pH-Wert von 2,7 erreicht hatte. Anschließend wurde das Ionenaustauscherharz abfiltriert und die wäßrige Lösung mit 1 molarer NaOH-Lösung auf einen pH-Wert von 4,8 gebracht.

Das Vlies wurde in eine Form gegeben und mit dem Sol übergossen, so daß das Vlies ganz mit Sol bedeckt war. Die Form wurde dann dicht verschlossen und in einem Trockenschrank für 5 Stunden bei 85°C gelagert.

Die so hergestellte Gelplatte wurde nun um einen Glaszylinder mit 10 cm Durchmesser gewickelt. Die Platte wurde jeweils einmal mit der Oberseite zum Glaszylinder und einmal mit der Unterseite zum Glaszylinder um den Zylinder gewickelt. Danach wurde der Vorgang noch einmal wiederholt, wobei die Platte um 90° gedreht wurde.

Die Matten wurden dann mit Aceton gewaschen bis der Wassergehalt unter 0,5 Gew.-% lag. Das feuchte Gel wurde mit 10 Gew.-% Trimethylchlorsilan (TMCS) versetzt und 24 Stunden bei Raumtemperatur gelagert. Danach wurde es noch sechsmal mit Aceton gewaschen. Die Trocknung erfolgte in zwei Stufen, 24 Stunden bei 50°C und 850 mbar Druck, dann 12 Stunden bei 140°C und 50 mbar Druck.

Die Dichte des Verbundmaterials betrug 0,25 g/ cm$^3$. Wärmeleitfähigkeit und Modul wurden wie in Beispiel 1 bestimmt. Für die Wärmeleitfähigkeit ergab sich ein Wert von 18 mW/mK, für den Modul 2 MPa.

Die Aerogelmatte zerbrach bei der Dreipunkt-Biegemessung nicht bei einer bestimmten Spannung, sondern verformte sich bei hohen Lasten nur irreversibel.

**Patentansprüche**

1. Verbundstoff in Form einer Matte, enthaltend ein Aerogel mit Porositäten über 60 % und Dichten unter 0,6 g/cm$^3$ und darin verteilte Fasern, dadurch gekennzeichnet, daß das Aerogel Risse aufweist und die von den Rissen eingeschlossenen Aerogel-Bruchstücke, deren mittleres Volumen 0,001 mm$^3$ bis 1 cm$^3$ beträgt, durch die Fasern zusammengehalten werden.

2. Verbundstoff gemäß Anspruch 1, dadurch gekennzeichnet, daß das Aerogel SiO$_2$-Gruppen enthält.

3. Verbundstoff gemäß Anspruch 1 oder 2, dadurch gekennzeichnet, daß der Volumenanteil der Fasern 0,1 bis 30 % beträgt.

4. Verbundstoff gemäß mindestens einem der Ansprüch 1 bis 3, dadurch gekennzeichnet, daß der Faserdurchmesser

   a) bei nicht metallisierten Fasern 0,1 bis 30 μm und/oder
   b) bei metallisierten Fasern 0,1 bis 20 μm beträgt.

5. Verbundstoff gemäß mindestens einem der Ansprüche 1 bis 4, dadurch gekennzeichnet, daß die Fasern in Form von Vliesen oder Matten vorliegen.

6. Verbundstoff gemäß Anspruch 5, dadurch gekennzeichnet, daß er mindestens zwei Matten enthält, die durch Verklebung oder mechanische Verbindung fest miteinander verbunden sind, oder durch eine Hülle zusammengehalten werden.

7. Verbundstoff gemäß Anspruch 5 oder 6, dadurch gekennzeichnet, daß mindestens eine Matte auf mindestens einer Seite kaschiert ist.

8. Verbundstoff gemäß mindestens einem der Ansprüche 1 bis 4, dadurch gekennzeichnet, daß die Fasern einzeln und in ungeordneter oder ausgerichteter Form vorliegen, und ihre Länge größer als 1 cm ist.

9. Verbundstoff gemäß mindestens einem der Ansprüche 1 bis 8, dadurch gekennzeichnet, daß der Verbundstoff zusätzlich ein IR-Trübungsmittel enthält.

10. Verbundstoff gemäß mindestens einem der Ansprüche 1 bis 9, dadurch gekennzeichnet, daß er hydrophob ist.

11. Verfahren zur Herstellung eines Verbundstoffs gemäß Anspruch 1, dadurch gekennzeichnet, daß

a) ein Sol hergestellt wird,
b) dem Sol Fasern zugesetzt werden,
c) das in b) erhaltene Sol in ein Gel überführt wird,
d) durch geeignete Verformung des Gels gezielt in diese Risse eingebracht werden, so daß durch Fasern verbundene Bruchstücke mit einem mittleren Volumen von 0,001 mm$^3$ bis 1 cm$^3$ entstehen, wobei gegebenenfalls vor, während und/oder nach der Verformung die in dem Gel enthaltene Flüssigkeit getauscht wird, und
e) das in d) erhaltene, verformte Gel so getrocknet wird, daß ein Aerogel entsteht.

12. Verfahren gemäß Anspruch 11, dadurch gekennzeichnet, daß man das in Schritt c) oder d) erhaltene Gel bei einer Temperatur von 20°C bis zum Siedepunkt der in dem Gel enthaltenen Flüssigkeit altern läßt.

13. Verfahren zur Herstellung eines Aerogel-Verbundstoffs gemäß Anspruch 11 oder 12, dadurch gekennzeichnet, daß

e1) das im Schritt d) erhaltene Gel mit einer oder mehreren oberflächenmodifizierenden Substanzen so umgesetzt wird, daß ein so großer Anteil der Oberflächengruppen des Gels durch Gruppen der oberflächenmodifizierenden Substanz ersetzt wird, daß eine weitere Kondensation zwischen den Oberflächengruppen auf verschiedenen Porenoberflächen weitgehend unterdrückt wird und/oder durch Änderung des Kontaktwinkels zwischen Porenoberfläche und Flüssigkeit aus der getrocknet wird, die Kapillarkräfte reduziert werden,
e2) gegebenenfalls die in dem Gel enthaltene Flüssigkeit ausgetauscht wird und
e3) das resultierende Gel bei einer Temperatur unter der kritischen Temperatur der in dem Gel enthaltenen Flüssigkeit und einem Druck von 0,001 bar bis zu dem Dampfdruck dieser Flüssigkeit bei dieser Temperatur getrocknet wird.

14. Verfahren gemäß Anspruch 13, dadurch gekennzeichnet, daß das Gel in Schritt e1) mit mindestens einer oberflächen modifizierenden Substanz der allgemeinen Formel R'$_n$MX$_m$ umgesetzt wird, worin R' Wasserstoff oder ein nicht reaktiver, organischer, linearer, verzweigter, zyklischer, aromatischer oder heteroaromatischer Rest ist, wobei die R' unabhängig voneinander gleich oder verschieden sind, M = Al oder Si ist, X ein Halogen oder ein Rest -OR", -SR" sowie -NR"$_2$ ist, wobei R" einen geradkettigen oder verzweigten, ein- oder mehrfach gleich oder verschieden substituierten aliphatischen Rest C$_1$ bis C$_{18}$ darstellt, in dem eine oder mehrere CH$_2$-Gruppen durch .C≡C-, -CH=CH-,-COO-, -O(C=O)-, SiR'"$_2$-, -CO-, Phenylendiyl und/oder bis zu jede zweite CH$_2$- Einheit durch O oder NR'" ersetzt sein können, wobei R'" gleich Phenyl, C$_1$-C$_{18}$-Alkyl oder Benzyl ist, oder R" ein Benzylrest oder Phenylrest bedeutet, der durch 1 bis 5 Substituenten R', OH, OR', COOR', OCOR', SO$_3$H, SO$_2$Cl, F, Cl, Br, NO$_2$ oder CN substituiert sein kann; und im Falle von N die R" unabhängig voneinander gleich oder verschieden sein können, n und m ganze Zahlen größer Null sind, deren Summe der Wertigkeit von M entspricht, wobei für m ≥ 2 die X unabhängig voneinander gleich oder verschieden sein können.

15. Verfahren zur Herstellung von SiO$_2$-Aerogelmatten mit Porositäten größer als 60 Vol.-% und Dichten kleiner als 0,6 g/cm$^3$, dadurch gekennzeichnet, daß

a) eine wäßrige Wasserglaslösung auf einen pH-Wert ≤ 3 eingestellt und zu der dabei entstandenen Kieselsäure eine Base gegeben wird,
b) Fasern zugegeben werden,
c) man die Kieselsäure polykondensieren läßt,
d) durch geeignete Verformung des Gels gezielt in dieses Risse eingebracht werden, so daß durch Fasern verbundene Bruchstücke mit einem mittleren Volumen von 0,001 mm$^3$ bis 1 cm$^3$ entstehen, wobei vor, während und/oder nach der Verformung das Gel mit einem organischen Lösungsmittel gewaschen wird, bis der Wassergehalt des Gels ≤ 5 Gew.-% ist,
e1) das in Schritt d) erhaltene Gel mit einem Silylierungsmittel umgesetzt wird,

e2) gegebenenfalls das silylierte Gel mit einem organischen Lösungsmittel gewaschen wird bis der Restgehalt des unumgesetzten Silylierungsmittels ≤ 1 Gew.-% ist und

e3) das in Schritt e1) oder e2) erhaltene silylierte Gel bei -30 bis 200°C und 0,001 bis 20 bar getrocknet wird.

16. Verfahren gemäß mindestens einem der Ansprüche 11 bis 15, dadurch gekennzeichnet, daß das Gel in Schritt e3) durch ein dielektrisches Verfahren getrocknet wird.

17. Verfahren gemäß Anspruch 16, dadurch gekennzeichnet, daß das Gel durch Mikrowellen getrocknet wird.

18. Verfahren zur Herstellung eines Aerogel-Verbundstoffs gemäß Anspruch 11 oder 12, dadurch gekennzeichnet, daß das in Schritt d) erhaltene Gel getrocknet wird, indem

e1) die im Gel enthaltene Flüssigkeit in einen überkritischen Zustand überführt wird, und anschließend,

e2) die Flüssigkeit durch Entspannungsverdampfung bei überkritischer Temperatur entfernt wird.

19. Verwendung eines Verbundstoffes gemäß einem der Ansprüche 1 bis 10 als Wärmeisolationsmaterial und/oder Schallabsorptionsmaterial.

**Claims**

1. A mat-shaped composite comprising an aerogel having porosities above 60 % and densities below 0.6 g/cm$^3$ and fibers dispersed therein, the aerogel having cracks and the aerogel fragments bounded by the cracks, whose average volume is 0.001 mm$^3$ to 1 cm$^3$, being held together by the fibers.

2. The composite of claim 1, wherein the aerogel contains SiO$_2$ groups.

3. The composite of claim 1 or 2, wherein the volume proportion of fiber is 0.1 to 30 %.

4. The composite of at least one of claims 1 to 3, wherein the fiber diameter is

a) 0.1 to 30 μm in the case of unmetallized fiber and/or

b) 0.1 to 20 μm in the case of metallized fiber.

5. The composite of at least one of claims 1 to 4, wherein the fibers are present in the form of webs or mats.

6. The composite of claim 5, comprising at least two mats firmly joined together adhesively or mechanically or held together by a sleeve.

7. The composite of claim 5 or 6, wherein at least one mat is laminated on at least one side.

8. The composite of at least one of claims 1 to 4, wherein the fibers are present individually and in random or oriented form and their length is greater than 1 cm.

9. The composite of at least one of claims 1 to 8, further comprising an IR opacifier.

10. The composite of at least one of claims 1 to 9, being hydrophobic.

11. A process for producing a composite as claimed in claim 1, which comprises

a) preparing a sol,
b) adding fibers to the sol,
c) converting the sol obtained in b) into a gel,
d) subjecting the gel to a suitable deformation process to introduce cracks into it in a specific manner to form fiber-connected fragments having an average volume of 0.001 mm$^3$ to 1 cm$^3$ with or without the liquid present in the gel being exchanged before, during and/or after the deformation, and
e) drying the deformed gel obtained in d) in such a way that an aerogel is obtained.

12. The process of claim 11, wherein the gel obtained in step c) or d) is aged at a temperature of 20°C to the boiling point of the liquid present in the gel.

13. The process of claim 11 or 12 for producing an aerogel composite, which comprises

e1) reacting the gel obtained in step d) with one or more surface-modifying substances in such a way that a sufficiently large proportion of the surface groups of the gel is replaced by groups of the surface-modifying substance as to substantially suppress any further condensation between the surface groups on various pore surfaces and/or reduce the capillary forces by changing the contact angle between pore surface and the liquid from which the drying takes place,

e2) optionally exchanging the liquid present in the gel, and

e3) drying the resulting gel at a temperature below the critical temperature of the liquid present in the gel and a pressure of 0.001 bar to the vapor pressure of this liquid at this temperature.

14. The process of claim 13, wherein the gel is reacted in step e1) with at least one surface-modifying substance of the general formula $R'_n MX_m$, where R' is hydrogen or a nonreactive, organic, linear, branched, cyclic, aromatic or heteroaromatic radical, each R' being independently identical to or different from the others, M is Al or Si, X is a halogen or a radical -OR", -SR" or -NR"$_2$, where R" is a straight-chain or branched, identically or differently mono- or polysubstituted aliphatic radical $C_1$ to $C_{18}$ in which one or more $CH_2$ groups can be replaced by -C≡C-, -CH=CH-, -COO-, -O(C=O)-, SiR'''$_2$-, -CO-, phenylenediyl and/or up to every second $CH_2$ unit can be replaced by O or NR''' where R''' is phenyl, $C_1$-$C_{18}$-alkyl or benzyl, or R" is a benzyl radical or phenyl radical which can be substituted by 1 to 5 substituents R', OH, OR', COOR', OCOR', $SO_3H$, $SO_2Cl$, F, Cl, Br, $NO_2$ or CN; and in the case of N each R" is independently identical to or different from the others, n and m are integers greater than zero whose sum corresponds to the valence of M, each X being independently identical to or different from the others for m ≥ 2.

15. A process for producing $SiO_2$ aerogel mats having porosities greater than 60 % by volume and densities less than 0.6 g/cm$^3$, which comprises

a) adjusting an aqueous waterglass solution to a pH ≤ 3 and adding a base to the resulting silicic acid,
b) adding fibers,
c) allowing the silicic acid to polycondense,
d) subjecting the gel to a suitable deformation process to introduce cracks into it in a specific manner to form fiber-connected fragments having an average volume of 0.001 mm$^3$ to 1 cm$^3$, the gel being washed with an organic solvent before, during and/or after the deformation until the water content of the gel is ≤ 5 % by weight,
e1) reacting the gel obtained in step d) with a silylating agent,
e2) optionally washing the silylated gel with an organic solvent until the residual level of unconverted silylating agent is ≤ 1 % by weight, and
e3) drying the silylated gel obtained in step e1) or e2) at -30 to 200°C and 0.001 to 20 bar.

16. The process of at least one of claims 11 to 15, wherein the drying of the gel in step e3) is effected by means of a dielectric process.

17. The process of claim 16, wherein the gel is dried by microwaves.

18. The process of claim 11 or 12 for producing an aerogel composite, wherein the gel obtained in step d) is dried by

e1) converting the liquid present in the gel into a supercritical state and then
e2) removing the liquid by flash vaporization at supercritical temperature.

19. The use of a composite as claimed in any of claims 1 to 10 as thermal insulating material and/or sound absorption material.

**Revendications**

1. Matériau composite sous la forme d'une natte contenant un aérogel présentant des porosités supérieures à 60 % et des densités inférieures à 0,6 g/cm$^3$ et des fibres réparties dedans, caractérisé en ce que l'aérogel présente des fissures et en ce que les fragments d'aérogel entourés par les fissures, dont le volume moyen est de 0,001mm$^3$ à 1 cm$^3$, sont retenus par les fibres.

2. Matériau composite suivant la revendication 1, caractérisé en ce que l'aérogel contient des groupes $SiO_2$.

3. Matériau composite suivant l'une des revendications 1 et 2, caractérisé en ce que la fraction volumique des fibres est de 0,1 à 30 %.

4. Matériau composite suivant au moins l'une des revendications 1 à 3, caractérisé en ce que le diamètre des fibres est

a) pour des fibres non métallisées de 0,1 à 30 μm et/ou
b) pour des fibres métallisées de 0,1 à 20 μm.

5. Matériau composite suivant au moins l'une des revendications 1 à 4, caractérisé en ce que les fibres se présentent sous la forme de nappes ou de nattes.

6. Matériau composite suivant la revendication 5, caractérisé en ce qu'il contient au moins deux nattes, qui sont mutuellement reliées de manière fixe par collage ou liaison mécanique ou qui sont maintenues ensemble par une enveloppe.

7. Matériau composite suivant l'une des revendications 5 et 6, caractérisé en ce qu'au moins une natte est doublée sur au moins un côté.

8. Matériau composite suivant au moins l'une des revendications 1 à 4, caractérisé en ce que les fibres se présentent isolément ou sous une forme désordonnée ou orientée, et en ce que leur longueur est supérieure à 1 cm.

9. Matériau composite suivant au moins une des revendications 1 à 8, caractérisé en ce que le matériau composite contient en supplément un agent opacifiant aux IR.

10. Matériau composite suivant au moins l'une des revendications 1 à 9, caractérisé en ce qu'il est hydrophobe.

11. Procédé de préparation d'un matériau composite suivant la revendication 1, caractérisé en ce que

　　　a) un sol est préparé,
　　　b) des fibres sont ajoutées au sol,
　　　c) le sol obtenu sous b) est converti en un gel,
　　　d) par une déformation appropriée du gel des fissures sont introduites dans ce dernier de manière recherchée, de façon à obtenir des fragments présentant un volume moyen de 0,001 $mm^3$ à 1 $cm^3$ qui sont reliés par des fibres, le liquide contenu dans le gel étant éventuellement échangé avant, pendant et/ou après la déformation, et
　　　e) le gel déformé, obtenu sous d), est séché de façon à obtenir un aérogel.

12. Procédé suivant la revendication 11, caractérisé en ce qu'on laisse vieillir le gel obtenu dans l'étape c) ou d) à une température de 20°C jusqu'au point d'ébullition du liquide contenu dans le gel.

13. Procédé de préparation d'un matériau composite contenant un aérogel suivant l'une des revendications II et 12, caractérisé en ce que

　　　e1) le gel obtenu dans l'étape d) est amené à réagir avec une ou plusieurs substances de modification de surface de façon qu'une fraction suffisamment grande des groupes de surface du gel soit remplacée par des groupes de la substance de modification de surface pour qu'une condensation supplémentaire entre les groupes de surface sur différentes surfaces de pores soit largement supprimée et/ou que, par modification de l'angle de contact entre la surface des pores et le liquide dont on effectue le séchage, les forces capillaires soient réduites,
　　　e2) le liquide contenu dans le gel est éventuellement échangé, et
　　　e3) le gel résultant est séché à une température inférieure à la température critique du liquide contenu dans le gel et à une pression de 0,001 bar jusqu'à la tension de vapeur de ce liquide à cette température.

14. Procédé suivant la revendication 13, caractérisé en ce que le gel est amené à réagir dans l'étape e1) avec au moins une substance de modification de surface de la formule générale $R'_nMX_m$, dans laquelle R' représente de l'hydrogène ou un radical aromatique ou hétéroaromatique, cyclique, ramifié, linéaire, organique, non réactif, les R' étant indépendamment l'un de l'autre semblables ou différents, M = Al ou Si, X représente un halogène ou un radical -OR", -SR" et $-NR"_2$, où R" représente un radical aliphatique en $C_1$-$C_{18}$ linéaire ou ramifié, substitué à une ou à plusieurs reprises de manière identique ou différente, dans lequel un ou plusieurs groupes $CH_2$ peuvent être remplacés par $-C\equiv C-$, -CH=CH-, -COO-, -O(C=O)-, SiR"'2-, -CO-, phénylènediyle et/ou jusqu'à chaque deuxième unité $CH_2$ par O ou NR"', R"' représentant du phényle, un alkyle en $C_1$-$C_{18}$ ou du benzyle, ou R" représente un radical benzyle ou phényle qui peut être substitué par 1 à 5 substituants R', OH, OR', COOR', OCOR', $SO_3H$, $SO_2Cl$, F, Cl, Br, $NO_2$ ou CN, et dans le cas de N les R" pouvant être indépendamment l'un de l'autre identiques ou différents, n et m sont des nombres entiers supérieurs à 0, dont la somme correspond à la valence de M, les X pouvant indépendamment l'un de l'autre être identiques ou différents pour m ≥ 2.

15. Procédé de préparation de nattes de $SiO_2$-aérogel présentant des porosités supérieures à 60 % en volume et des densités inférieures à 0,6 $g/cm^3$, caractérisé en ce que

　　　a) on ajuste une solution aqueuse de verre soluble à une valeur de pH ≤ 3 et on verse une base dans l'acide silicique ainsi obtenu,
　　　b) on ajoute des fibres,
　　　c) on laisse l'acide silicique polycondenser,
　　　d) par une déformation appropriée du gel, on introduit dans celui-ci de manière recherchée des fissures de façon à obtenir des fragments reliés par des fibres ayant un volume moyen de 0,001 $mm^3$ à 1 $cm^3$, le gel étant lavé par un solvant organique avant, pendant et/ou après la déformation, jusqu'à ce que la teneur en eau du gel soit ≤ 5 % en poids,
　　　e1) on fait réagir le gel obtenu dans l'étape d) avec un agent de silylation,
　　　e2) on lave éventuellement le gel silylé avec un solvant organique jusqu'à ce que la teneur résiduaire de l'agent de silylation qui n'a pas réagi soit ≤ 1 % en poids, et
　　　e3) on sèche le gel silylé, obtenu dans l'étape e1) ou e2) à -30 jusqu'à 200°C et à 0,001 jusqu'à 20 bars.

16. Procédé suivant au moins l'une des revendications 11 à 15, caractérisé en ce que le gel dans l'étape e3) est séché par un procédé diélectrique.

17. Procédé suivant la revendication 16, caractérisé en ce que le gel est séché par des micro-ondes.

18. Procédé de préparation d'un matériau composite contenant un aérogel suivant l'une des revendications 11 et 12, caractérisé en ce que le gel obtenu dans l'étape d) est séché,

      e1) en transférant le liquide contenu dans le gel dans un état surcritique, et ensuite
      e2) en éliminant le liquide par vaporisation éclair à une température surcritique.

19. Utilisation d'un matériau composite suivant l'une des revendications 1 à 10, comme matière d'isolation thermique et/ou comme matière d'absorption acoustique.

_Fig. 1_